**Europäisches Patentamt**

**European Patent Office**

**Office européen des brevets**

(19)

(11) **EP 1 279 944 A2**

(12) **EUROPÄISCHE PATENTANMELDUNG**

(43) Veröffentlichungstag:
29.01.2003 Patentblatt 2003/05

(51) Int Cl.⁷: $G01N\ 11/14$, $G01B\ 7/16$

(21) Anmeldenummer: 02016396.0

(22) Anmeldetag: 26.07.2002

(84) Benannte Vertragsstaaten:
**AT BE BG CH CY CZ DE DK EE ES FI FR GB GR IE IT LI LU MC NL PT SE SK TR**
Benannte Erstreckungsstaaten:
**AL LT LV MK RO SI**

(30) Priorität: **26.07.2001 DE 10136374**

(71) Anmelder: **BASF AKTIENGESELLSCHAFT**
**67056 Ludwigshafen (DE)**

(72) Erfinder:
• **Laun, Martin**
**68199 Mannheim (DE)**

• **Wassner, Erik**
**68159 Mannheim (DE)**
• **Reuther, Wolfgang**
**67454 Hassloch (DE)**
• **Schuler, Peter**
**67071 Ludwigshafen (DE)**

(74) Vertreter: **Isenbruck, Günter, Dr.**
**Patent- und Rechtsanwälte,**
**Bardehle-Pagenberg-Dost-Altenburg-Geissler-Isenbruck**
**Theodor-Heuss-Anlage 12**
**68165 Mannheim (DE)**

(54) **Verfahren und Vorrichtung zur Messung rheologischer Eigenschaften**

(57) Die Erfindung bezieht sich auf ein Verfahren und eine Vorrichtung zur Bestimmung rheologischer Eigenschaften eines Materials, wobei ein Stößel (2) durch seine Auslenkung eine Kraft auf das als Probe (7) vorliegende Material ausübt und eine Messung des zeitlichen Verlaufs der Kraft und der Auslenkung des Stößels (2) erfolgt. Dabei setzt sich die Kraft aus einem momentan statischen Anteil und einem sinusförmigen Anteil zusammen. Die Probe (7) kann durch eine Folie (8) abgedeckt sein. Die Vorrichtung enthält den Stößel (2) zur Ausübung der Kraft auf die Probe (7), einen Elektromagneten (3) zur Auslenkung des Stößels (2) und einen Wegaufnehmer (4) zur Messung der Auslenkung des Stößels (2).

FIG.1

**EP 1 279 944 A2**

**Beschreibung**

Die vorliegende Erfindung betrifft ein Verfahren und eine Vorrichtung zur Bestimmung rheologischer Eigenschaften eines Materials, beispielsweise der Viskosität.

Rheologie ist die Wissenschaft, die sich mit Fließvorgängen befaßt, also mit der fortwährenden Deformation eines Materials unter Einwirkung äußerer Kräfte. Die Deformation erfolgt beim Fließen (viskose Verformung) mit endlicher Geschwindigkeit. Bei realen Materialien wird das viskose Verhalten durch plastisches und elastisches Verhalten überlagert. Zur Messung rheologischer Größen werden gemäß dem Stand der Technik verschiedene Rheometer eingesetzt. Zu unterscheiden sind Rotationsrheometer, Fallviskosimeter, Druckrheometer und Quetschrheometer.

In Labors sind Rotationsrheometer am verbreitetsten. Dabei werden generell drei unterschiedliche Meßsysteme mit genormter Geometrie verwendet. Diese unterschiedlichen Meßsysteme umfassen Kegel/Platte-Meßsysteme, Platte/Platte-Meßsysteme und Zylinder-Meßsysteme.

DE 199 11 441 A1 betrifft ein Rotationsviskosimeter mit einem Zylinder-Meßsystem, bei dem ein Meßzylinder in einem mit der zu untersuchenden Probe gefüllten zylindrischen Meßbecher rotiert. Dabei werden die Kräfte gemessen und ausgewertet, die die Probe auf den Meßzylinder ausübt, wobei die Probe den Spalt zwischen Meßzylinder und Meßbecher füllt.

Zu den Druckrheometern zählen Kapillar- und Schlitzrheometer. DE 198 46 579 C1 beschreibt eine Vorrichtung zum Messen der Viskosität plastischer Massen, insbesondere von Polymerschmelzen, nach dem Prinzip der Bestimmung des Druckabfalles beim Fließen der Masse durch eine Kapillare mit definiertem Querschnitt und definierter Länge.

Sonderbauformen arbeiten z.B. mit der Quetschströmungstechnik. Durch das Zusammendrücken einer scheibenförmigen Probe zwischen zwei Platten wird eine kombinierte Scher- und Dehnverformung im Material erzeugt. Die Ergebnisse solcher Messungen und ihre analytische Betrachtung sind in Laun, H.M., *Rheometry towards Complex Flows: Squeeze Flow Technique,* Makromol. Chem., Macromol. Symp. 56, 55 - 66 (1992) und Laun, H.M., Rady, M., Hassager, O., *Analytical solutions for squeeze flow with partial wall slip,* J. Non-Newtonian Fluid Mech., 81, 1 - 15 (1999) beschrieben.

Prozeßrheometer dienen der Erfassung rheologischer Größen in der Prozeßumgebung. Wünschenswert sind dafür eine schnelle Meßwertbildung und eine geringe Anfälligkeit gegenüber Verschmutzung und Verschleiß. Eine grobe Einteilung der Rheometer kann in Online- und in Inline-Rheometer erfolgen. Während Inline-Rheometer direkt vom Produktstrom durchflossen werden, nutzen Online-Rheometer einen Seitenstrom für die Zuführung von Probengut. Für Prozeßrheometer werden die verschiedensten Meßprinzipien eingesetzt, unter anderem auch die oben genannten.

Nachteile der bekannten Rheometer bestehen darin, daß sie jeweils nur eine kleine Anzahl von rheologischen Größen messen, beispielsweise nur die Viskosität, und daß sie nicht als Prozeßviskosimeter in Roboterarmen eingesetzt werden können. Der Einsatz in Roboterarmen scheitert meist daran, daß die Proben umständlich in das Rheometer eingebracht werden müssen. Ferner sind die Rheometer nach dem Stand der Technik Verschmutzungen durch das zu messende Material ausgesetzt und teilweise schwer zu reinigen (zum Beispiel das Schlitzviskosimeter).

Die Aufgabe der vorliegenden Erfindung ist es, ein Verfahren und eine Vorrichtung bereitzustellen, die die Messung verschiedener rheologischer Eigenschaften eines Materials ermöglichen und oben genannte Nachteile des Standes der Technik weitgehend beheben.

Diese Aufgabe wird erfindungsgemäß dadurch gelöst, daß ein Stößel durch seine Auslenkung eine Kraft auf das als Probe vorliegende Material ausübt und eine Messung des zeitlichen Verlaufs der Kraft und der Auslenkung des Stößels bzw. der Probenhöhe erfolgt.

Unter einem Stößel ist in diesem Zusammenhang ein Gegenstand zu verstehen, der eine Kraft auf ein Material ausüben kann, beispielsweise der Kopf einer Stange. Zur Auslenkung des Stößels bewegt sich die Stange in einer Längsbewegung, senkrecht zu der zu messenden Probe. Aus den beiden Größen, zeitlicher Verlauf der Kraft und zeitlicher Verlauf der Auslenkung, lassen sich rheologische Eigenschaften des als Probe vorliegenden Materials wie die Schubspannung $\tau$, die Scherrate $\dot{\gamma}$ und die Viskosität $\eta$ errechnen. Während der Messung wird die Temperatur konstant gehalten, da die Viskosität und andere rheologische Größen temperaturabhängig sind.

Die Kraft, die der Stößel auf die Probe ausübt, wird so gewählt, daß sie sich aus einem momentan statischen Anteil und einem sinusförmigen Anteil zusammensetzt. Durch den momentan statischen Anteil der Kraft wird der Stößel kontinuierlich in die zu messende Probe gedrückt, und die Probenhöhe verringert sich. Der überlagerte sinusförmigen Anteil der Kraft verursacht eine periodische Beanspruchung der Probe.

Die insgesamt eingeprägte Kraft in Abhängigkeit von der momentanen Probenhöhe H und der Zeit t ist:

$$F(H,t) = F_S(H) + \widetilde{F}(H,t) = F_S(H) + \hat{F}(H)\sin\omega t \, ,$$

mit der momentan statischen Kraft $F_S(H)$ und dem sinusförmigen Anteil $\tilde{F}$ $(H,t)$. Der sinusförmige Anteil hat eine Kreisfrequenz $\omega$ und eine Amplitude $F(H)$. Die zu messenden Größen zur Charakterisierung des zeitlichen Verlaufs der Stößelauslenkung sind die mittlere Pressgeschwindigkeit $\overline{\dot{H}}$ $(H)$ des Stößels und der oszillatorische Stößelweg $\tilde{H}$ $(H)$ $= H(H)[\sin(\omega t + \delta(H))]$, der eine Amplitude $H(H)$ und eine Phasendifferenz $\delta(H)$ zu der sinusförmigen Kraft $\tilde{F}$ $(H)$ aufweist. Durch die Überlagerung einer momentan statischen mit einer sinusförmigen Kraft und eine Messung des zeitlichen Verlaufs von Kraft und Auslenkung läßt sich eine Vielzahl von rheologischen Größen bestimmen.

Vorzugsweise bleibt die Gesamtkraft auf die zu messende Probe stets positiv ($F_S$ - F > 0 ), so daß der Stößel nicht von der Probe abhebt. Dies wird z.B. dadurch erreicht, daß F = $v \cdot F_S$ gesetzt wird, wobei der Vorfaktor $v$ einen Wert von 0,8 bis 0,95 annimmt, vorzugsweise einen Wert von 0,9.

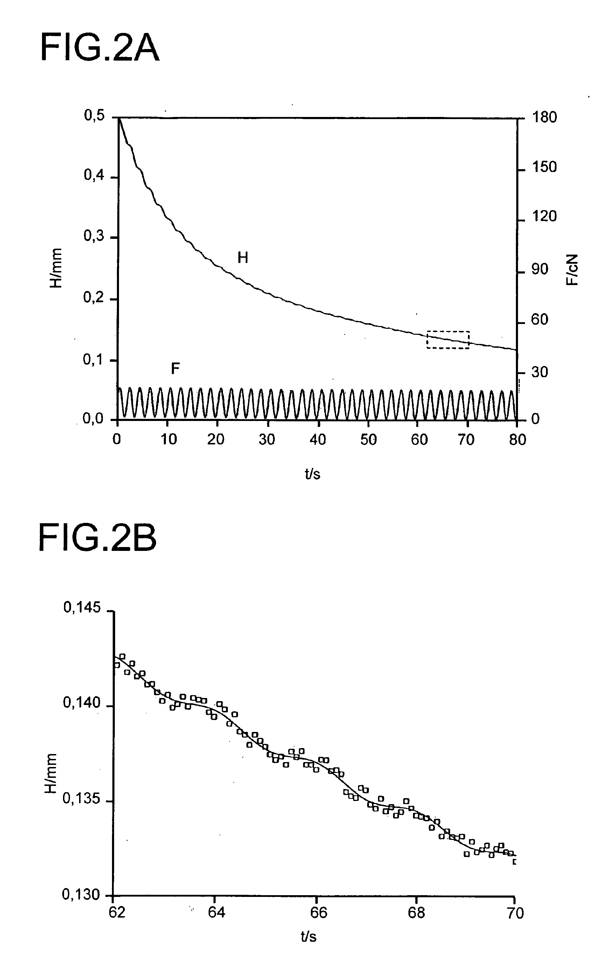

In einer bevorzugten Ausführungsform der vorliegenden Erfindung werden die Kräfte $F_S$ und $\hat{F}$ während der Messung des zeitlichen Verlaufs der Stößelauslenkung in Abhängigkeit von der Stößelauslenkung bzw. der aktuellen Probenhöhe H erhöht. Dadurch wird erreicht, daß mit abnehmender Probenhöhe bzw. zunehmender Stößelauslenkung die Meßfehler nicht zu groß werden. Bei Messungen mit konstanten Kräften $F_S$ und F, die von der Ausgangshöhe der Probe $H_0$ bis zu ihrer Endhöhe konstant bleiben, wird dagegen mit abnehmender Probenhöhe die mittlere Preßgeschwindigkeit und die überlagerte Wegamplitude immer kleiner, so daß die Meßfehler zu groß werden. Eine Beispielmessung mit konstanten Kräften ist in Abbildung 2 dargestellt und wird weiter unten näher erläutert. Dieser Nachteil zu großer Meßfehler wird durch das Erhöhen der Kräfte während der Messung in Abhängigkeit von der Stößelauslenkung bzw. von der Probenhöhe vermieden. Eine Möglichkeit, wie die Kräfte von der Probenhöhe bzw. Stößelauslenkung abhängen können, ist beispielsweise wie folgt:

$$F_S(H) = F_S(H_0)\frac{H_0}{H} \text{ und } \hat{F}(H) = \hat{F}(H_0)\frac{H_0}{H}.$$

Vorzugsweise werden aus dem zeitlichen Verlauf der Kraft auf die Probe, dem zeitlichen Verlauf der Auslenkung des Stößels und aus Geometriegrößen die Schubspannung $\tau$, die Scherrate $d\gamma/dt = \dot{\gamma}$, die Viskosität $\eta$, der dynamische Schubmodul G* und die Probenhöhe $H_0$ berechnet. Der zeitliche Verlauf der Auslenkung H(t) liefert eine mittlere Pressgeschwindigkeit $\overline{\dot{H}}$ und eine oszillierende Auslenkung $\tilde{H}$, welche gegenüber der anregenden Kraft um einen Phasenwinkel $\delta$ verschoben ist. Aus $\overline{\dot{H}}$, der mittleren Kraft, sowie Geometriegrößen (u.a. dem Radius des Stößels) sind die quasi-stationären rheologischen Größen Scherrate, Schubspannung und Viskosität zu bestimmen. Ferner ist bekannt, wie das Meßergebnis von der Probenhöhe unter dem Stößel abhängt. Deshalb kann aus dem für verschiedene Eindrücktiefen des Stößels gemessenen Verlauf der Eindrückgeschwindigkeit des Stößels auf die anfängliche Probenhöhe geschlossen werden. Aus der oszillierenden Höhenänderung ergibt sich sowohl der Betrag, als auch der Phasenwinkel $\delta$ des dynamischen Schubmoduls G*, so daß Speicher- und Verlustmodul bekannt sind. Der komplexe Schubmodul G* ist in die zwei gesonderten Materialfunktionen, den Speichermodul G' und den Verlustmodul G" separierbar. Der Speichermodul G' ist ein Maß für die elastisch in der Probe gespeicherte Energie, der Verlustmodul G" ein Maß für die in der Probe dissipierte Energie (viskoser Anteil). Es gilt

$$G^*(\omega) = G'(\omega) + iG''(\omega)$$

mit

$$G'(\omega) = |G^*(\omega)| \cdot \sin [\delta(\omega)]$$

und

$$G''(\omega) = |G^*(\omega)| \cdot \cos[\delta(\omega)].$$

Speicher- und Verlustmodul bzw. der Schubmodul sind frequenzabhängig.

Das in Form von Proben vorliegende Material wird bei der Berechnung der rheologischen Größen zunächst als Newtonsche Flüssigkeit betrachtet, unter Annahme der Wandhaftung und Vernachlässigung des Materials außerhalb der Stößelfläche. Korrekturen für nichtnewtonsche und viskoelastische Flüssigkeiten können gegebenenfalls mittels Korrekturformeln nachträglich durchgeführt werden. Vorzugsweise werden die Parameter zur Messung der rheologischen Eigenschaften so gewählt, daß diese Korrekturen vernachlässigbar klein sind.

In einer Ausführungsform der vorliegenden Erfindung besitzt der sinusförmige Anteil der Kraft eine Frequenz von 0,01 Hz bis 50 Hz, besonders bevorzugt eine Frequenz von 0,1 Hz bis 20 Hz. Oszillatorische Messungen werden bevorzugt im Bereich des linearviskoelastischen Verhaltens durchgeführt. In diesem Bereich sind bei konstanter Frequenz die Scheramplitude und die Schubspannungsamplitude zueinander proportional. Dies gilt bei genügend kleinen Schwingungsamplituden für praktisch alle Stoffe und Stoffsysteme. Bei zu großen Amplituden sind die beiden Größen nicht mehr proportional. Der linearviskoelastische Bereich ist dadurch charakterisiert, daß die Moduln G' und G" bzw. G* keine Amplitudenabhängigkeit zeigen, das heißt bei festgehaltener Frequenz konstant bleiben. Die Schwingungsamplitude wird bei dem erfindungsgemäßen Verfahren vorzugsweise so gewählt, daß sich eine Scheramplitude von ca. 0,5 einstellt. Die der momentan statischen Kraft überlagerte Schwingung kann mit konstanter Frequenz, sukzessive geänderter Frequenz oder auch mit einem Frequenzgemisch erfolgen. Eine sukzessive geänderte Frequenz kann beispielsweise dazu dienen, den Verlauf einer frequenzabhängigen rheologischen Größe zu bestimmen, wie zum Beispiel des Schubmoduls G*.

In einer bevorzugten Ausführungsform der vorliegenden Erfindung ist die Probe während der Bestimmung der rheometrischen Eigenschaften durch eine Folie abgedeckt. Dies ist besonders vorteilhaft, da eine Messung ohne direkten Substanzkontakt erfolgt und somit keine Verschmutzung des Stößels durch die Probe auftritt. Eine kostenverursachende und zeitaufwendige Reinigung des Stößels ist demnach unnötig. Dies erlaubt sequentielle Messungen an mehreren Proben. Die Folie zum Abdecken der Probe muß ausreichend weich sein, um eine direkte Übertragung der Kraft des Stößels auf die Probe zu gewährleisten. Ausreichend weich bedeutet, daß sich die Folie der Form des Stößels anpaßt, ohne daß der Stößel eine große Kraft ausüben muss. Die Folienfläche in direktem Kontakt mit der Stößelstirnfläche darf sich dabei möglichst nicht deformieren (Vermeidung von Wandgleiten) und sollte sich an der Stößelkante leicht deformieren lassen, so dass die Energiedissipation durch die Folie vernachlässigbar bleibt. Beispielsweise kann zum Abdecken der Probe während der Messung eine Aluminiumfolie oder eine Polymerfolie verwendet werden.

In vorteilhafter Weise beträgt die Dicke der Folie $H_F$ bei einem Stößelradius von R=6mm, einer Anfangs-Probenhöhe von $H_0$=0,5mm, einer Probenviskosität von $\eta$=100Pa·s und einem Folien-E-Modul von 200N/mm$^2$ bis 400N/mm$^2$ ca. 7µm bis 5µm.

In einer bevorzugten Ausführungsform des erfindungsgemäßen Verfahrens wird bei unbekannter Probenkonsistenz ein geeigneter Anfangswert für den momentan statischen Anteil der Kraft $F_S(H_0)$ mit Hilfe eines iterativen Verfahrens bestimmt. Ist diese Kraft zu hoch, so reduziert sich die Probenhöhe zu schnell, um aussagefähige Messungen zu machen. Bei einem vorgegebenen Verhältnis von $\hat{F}$ zu $F_S$ ($\hat{F} = v \cdot F_S$) hat es sich als zweckmäßig erwiesen, eine Wegamplitude $\hat{H}_{opt}$ von

$$\hat{H}_{opt} = a \cdot \frac{H^2}{3R}$$

mit a = 0,05 bis 2, vorzugsweise a = 0,5 für die Sinusschwingung zu wählen. Um diese angestrebte Wegamplitude zu erreichen und den dazugehörigen Wert des momentan statischen Anteils der Kraft zu berechnen wird das folgende iterative Verfahren durchgeführt:

1. Wahl eines zu niedrigen Anfangswertes $F_{S(0)}$,
2. Durchführung einer ersten Messung gemäß dem erfindungsgemäßen Verfahren,
3. Berechnung eines neuen Wertes $F_{S(1)}$ aus der sich bei dieser Messung ergebenden Amplitude $\hat{H}_0 (<< \hat{H}_{opt})$ gemäß

$$F_{S(n+1)} = F_{S(n)} \frac{\hat{H}_{nopt}}{\hat{H}_n}$$

mit n=0,
4. Durchführung einer erneuten Messung gemäß dem erfindungsgemäßen Verfahren mit dem neuen Kraft-Wert $F_{S(1)}$ und
5. n-malige Wiederholung dieses Verfahrens, bis die Amplitude $\hat{H}_n \approx \hat{H}_{opt}$ erreicht wird.

Der geeignete Anfangswert für den momentan statischen Anteil der Kraft $F_S(H_0)$ ist dann derjenige Kraftwert, der bei der n-ten Messung ermittelt wurde. Wenn die rheologischen Eigenschaften vieler Proben einer Materialsorte gemessen werden sollen, genügt es, den geeigneten Anfangswert $F_S(H_0)$ einmal zu ermitteln und dann für alle Proben der gleichen Materialsorte beizubehalten. Dadurch kann Zeit während des Meßprozesses eingespart werden.

Weiterhin betrifft die Erfindung eine Vorrichtung zur Bestimmung rheologischer Eigenschaften eines Materials, die einen Stößel zur Ausübung einer Kraft auf das als Probe vorliegende Material, einen Elektromagneten zur Auslenkung des Stößels und einen Wegaufnehmer zur Messung der Auslenkung des Stößels enthält. Die Steuerung der Messungen, die Datenerfassung und die Auswertung der Daten erfolgt vorzugsweise mittels mindestens eines Rechners. Der Stößel übt erfindungsgemäß eine Kraft auf die Probe aus, die sich aus einem momentan statischen Anteil und einem sinusförmigen Anteil zusammensetzt.

Vorteilhaft ist bei der erfindungsgemäßen Vorrichtung, daß die Proben nicht wie im Stande der Technik in der Meßvorrichtung platziert und nach der Messung wieder aus ihr entfernt werden müssen. Die erfindungsgemäße Vorrichtung kann (z.B. in einem Roboterarm) an den Ort der Messung herangeführt werden oder die Proben unter der Vorrichtung hinwegbewegt werden, beispielsweise auf einem Fließband. Daher eignet sich die erfindungsgemäße Vorrichtung hervorragend als Prozeßrheometer.

Über den Spulenstrom des Elektromagneten kann die Kraft, die der Stößel auf die Probe ausübt, gesteuert werden. Der Stößel wird durch Induktion ausgelenkt. Er kann zum Beispiel durch Blattfedern in dem Elektromagneten befestigt sein, so daß er geführte Längsbewegungen ausführen kann. Der Spulenstrom wird für die auslenkungsabhängige Rückstellkraft der Blattfedern so geregelt (Rechner-Steuerung), dass die gewünschte Kraft unabhängig von der momentanen Auslenkung erreicht wird. Voraussetzung dafür ist, daß die Kalibrierkurve bekannt ist, die den Zusammenhang zwischen Auslenkung und Rückstellkraft aufzeigt. Als rücktreibende Kraft, die bei abgeschaltetem Elektromagnet den Stößel in seiner nicht ausgelenkten Lage hält, dient beispielsweise in dieser Ausführungsform der vorliegenden Erfindung eine Federkraft, die proportional zur Auslenkung des Stößels ist.

Der Wegaufnehmer mißt die Auslenkung des Stößels. In einer Ausführungsform der Erfindung ist der Wegaufnehmer ein induktiver Wegaufnehmer. Es sind aber auch andere Ausführungsformen des Wegaufnehmers denkbar. Der induktive Wegaufnehmer hat den Vorteil, daß er die Auslenkung des Stößels berührungsfrei und ohne Verschleiß mechanischer Komponenten mißt.

In einer bevorzugten Ausführungsform der vorliegenden Erfindung wird die sich während der Messung unter der Probe befindende Platte oder der Probenhalter, auf dem sich die Probe befindet, thermostatisiert. Die Temperatur wird dadurch während der Messung mit der erfindungsgemäßen Vorrichtung konstant gehalten, da die Viskosität und die dynamischen Moduln temperaturabhängig sind. Durch ihre thermische Leitfähigkeit erreicht die dünne Probe die Temperatur der Platte oder des Probenhalters. Der Stößel kann dagegen als thermischer Isolator gestaltet sein, z.B. durch Fertigung aus Keramik, so daß seine Temperatur nicht geregelt werden muß.

In einer bevorzugten Ausführungsform der Erfindung wird die erfindungsgemäße Vorrichtung in einem Roboterarm eingesetzt. Die Messung kann demnach in den Produktionsprozeß integriert werden. Es können viele Messungen schnell nacheinander erfolgen. Das Nichtauftreten von Verschmutzungen und die einseitige Krafteinprägung und Wegmessung der erfindungsgemäßen Vorrichtung ermöglichen ihren Einsatz in einem Roboterarm.

Es kann zweckmäßig sein, daß sich zur Bestimmung der rheologischen Eigenschaften mindestens eine Probe auf einem Probenhalter mit mindestens einem Näpfchen befindet. Darunter wird in diesem Zusammenhang eine Vertiefung in dem Probenhalter verstanden, in die eine Probe eingefüllt werden kann. Der Probenhalter kann viele Näpfchen nebeneinander enthalten. Ein Vorteil der erfindungsgemäßen Vorrichtung ist, daß der Einfluß der Füllmenge der Probe in dem jeweiligen Näpfchen auf das Meßergebnis sehr gering ist. Es können also Proben mit verschiedenen Schichtdicken untersucht werden, ohne die genaue Dicke der Probe zu kennen. Ferner ist die vorliegende Erfindung im Gegensatz zum Stande der Technik auch für die Untersuchung von kleinen Probenvolumina geeignet, die weniger als 0,1 ml betragen können. Vorzugsweise werden die rheologischen Eigenschaften von Proben mit Schichtdicken von 1 bis 0,01 mm bestimmt, besonders bevorzugt von Proben mit Schichtdicken von 0,5 bis 0,05 mm. Befinden sich die Proben in Näpfchen mit dem Radius $R_N$, so wird ein Stößelradius $R \leq 1/2 \cdot R_N$ gewählt, da ansonsten die Einflüsse des Näpfchenrandes nicht zu vernachlässigen sind.

In einer weiteren bevorzugten Ausführungsform der vorliegenden Erfindung ist der Stößel zylinderförmig und besitzt einen Durchmesser von nur wenigen Millimetern.

Ferner betrifft die Erfindung die Verwendung der erfindungsgemäßen Vorrichtung zur Bestimmung der Schubspannung, der Scherrate, der Viskosität, des dynamischen Schubmoduls und der Schichtdicke der Probe aus den mit der Vorrichtung gemessenen Meßwerten.

In einer bevorzugten Ausführungsform der vorliegenden Erfindung ist das als Probe vorliegende Material ein organisches oder ein anorganisches Polymer. Das Polymer kann unter Verwendung der erfindungsgemäßen Vorrichtung und/oder nach dem erfindungsgemäßen Verfahren hinsichtlich seiner rheologischen Eigenschaften untersucht werden. Mit Presskräften zwischen 0,01N und 5N sind Stoffe mit einer Viskosität von 0,005Pa·s bis 10000Pa·s als Proben geeignet. Mögliche Probenformen sind Schmelzen, Lösungen, Pasten, weiche Filme, Schaumstoffe und viele mehr.

Anhand der beiliegenden Figuren wird die Erfindung nachstehend näher erläutert.

Es zeigt:

Figur 1    eine erfindungsgemäße Vorrichtung zur Bestimmung der rheologischen Eigenschaften eines als Probe vorliegenden Materials,

Figur 2a/b     den Verlauf der Probenhöhe H in Abhängigkeit von der Zeit bei konstanten (ebenfalls dargestellten) Kraftwerten, die nicht von der Probenhöhe abhängen und

Figur 3a/b     den Verlauf der Probenhöhe H in Abhängigkeit von der Zeit bei an die Probenhöhe angepassten (ebenfalls dargestellten) Kraftwerten.

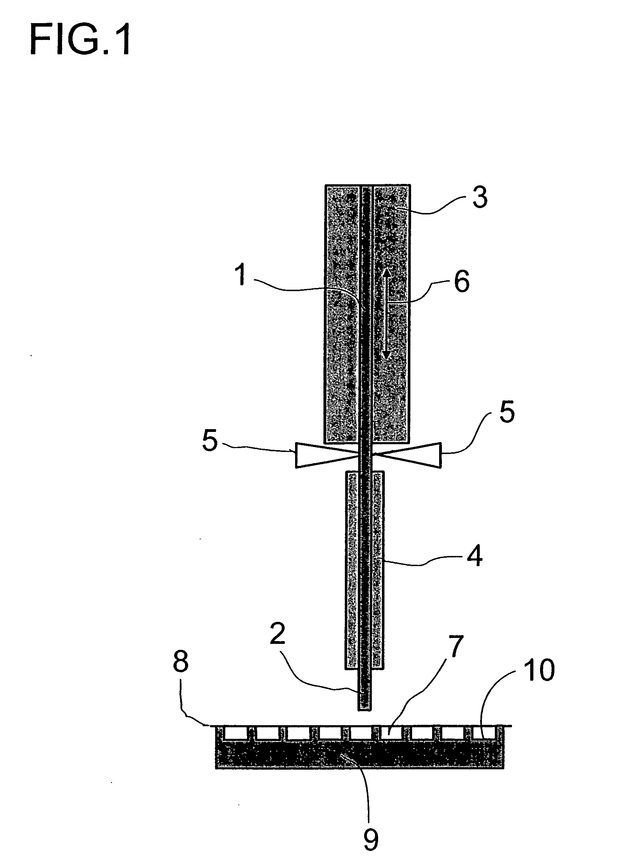

Die in Fig. 1 dargestellte erfindungsgemäße Vorrichtung weist eine Stange 1, an deren Ende sich der Stößel 2 befindet, einen Elektromagneten 3 und einen Wegaufnehmer 4 auf. Die Steuerung der Vorrichtung, die Datenerfassung und die Auswertung der Daten erfolgen mittels Rechner, der jedoch nicht in der Figur dargestellt ist. Die Stange 1 ist durch Blattfedern 5 an dem Elektromagnet 3 befestigt. Bei ausgeschaltetem Elektromagnet 3 wird die Stange durch die Blattfedern 5 in einer Position gehalten, bei der die Auslenkung des Stößels 2 null beträgt. Die Stange 1 wird so geführt, daß sie nur Bewegungen in Längsrichtung 6 ausführen kann. Die Bewegung in Längsrichtung 6 kann beispielsweise eine Translationsbewegung oder eine Schwingung sein, oder eine Überlagerung aus Translation und Schwingung. Zur Auslenkung des Stößels aus der Null-Lage wird der Elektromagnet 3 eingeschaltet, so daß eine Kraft auf die Stange 1 zusätzlich zu der rücktreibenden Kraft der Blattfedern 5 wirkt. Die Größe der Kraft auf den Stößel 2 ist durch den Spulenstrom der Elektromagnet-Spulen festgelegt. Die rücktreibende Federkraft wirkt der Auslenkung entgegen. Der Spulenstrom $I_0$ wird so gewählt, daß sich eine Scheramplitude von ca. 0,5 einstellt. Der Stößel 2 wird direkt über den Proben 7 positioniert. Eine Folie 8 trennt den Stößel 2 und die Proben 7. Sie verhindert den direkten Kontakt des Stößels 2 mit der Probe 7 und damit die Verschmutzung des Stößels 2 durch die Probe 7. Die Proben 7 befinden sich in einem Probenhalter 9, in dem sie nebeneinander in Näpfchen 10 angeordnet sind. Durch den momentan statischen Anteil der Kraft wird der Stößel 2 kontinuierlich in die Probe 7 gedrückt. Die überlagerte Sinusschwingung des Stößels 2 verursacht eine periodische Beanspruchung der Probe 7 mit der Frequenz $f = \omega/2\pi$. Gleichzeitig mißt der Wegaufnehmer 4 den zeitlichen Verlauf der Auslenkung des Stößels 2. Bekannt sind demnach der zeitliche Verlauf der Kraft und der Auslenkung des Stößels 2. Aus der mittleren Kraft $F_S$ und der mittleren Auslenkung des Stößels H folgt die (Rand-)Schubspannung $\tau$ gemäß

$$\tau = \frac{2HF_S}{\pi R^3},$$

mit R, dem Radius des Stößels 2, der in diesem Falle einen runden Querschnitt besitzt und zylinderförmig ist. Der Radius des Stößels ist dabei kleiner als der halbe Probenradius.

Diese Gleichung ebenso wie die folgenden gelten für Newtonsche Flüssigkeiten, unter Annahme der Wandhaftung und Vernachlässigung des Materials außerhalb der Stößelfläche. Korrekturen für Nicht-Newtonsche Flüssigkeiten können mittels Korrekturformeln nachträglich durchgeführt werden. Vorzugsweise werden die Parameter zur Messung der rheologischen Eigenschaften so gewählt, daß diese Korrekturen vernachlässigbar klein sind. Ferner gelten die hier angegebenen Gleichungen nur in dem Bereich $H_0 \ll R$. Vorzugsweise gilt $H_0 \leq R/10$. Dies bedeutet, daß bei Verkleinerung des Stößelradius R auf die Hälfte, die halbe Probendicke $H_0$ gewählt wird, bei Verkleinerung von R auf 1/3 wird die Probendicke ebenfalls gedrittelt. Weiterhin wird die Kraft $F_S$ bei Halbierung des Stößelradius R vorzugsweise auf 1/4 reduziert, bei Verkleinerung von R auf 1/3 wird die Kraft vorzugsweise geneuntelt.

Aus der mittleren Eindrückgeschwindigkeit $\overline{\dot{H}}$ ergibt sich die (Rand-)Scherrate $\dot{\gamma}$ gemäß

$$\dot{\gamma} = \frac{3\left(-\overline{\dot{H}}\right)R}{H^2} .$$

Das Verhältnis der Schubspannung $\tau$ zu der Scherrate $\dot{\gamma}$ ergibt die Viskosität $\eta$.

$$\eta = \frac{\tau}{\dot{\gamma}}$$

Der zeitliche Verlauf der Kraft weist eine Phasenverschiebung $\delta$ zum zeitlichen Verlauf der Auslenkung auf. Aus der oszillierenden Höhenänderung und der Phasenverschiebung wird der dynamische Modul (Betrag, Speicher- und Verlustmodul) bestimmt. Der Betrag des Schubmoduls folgt dabei aus

$$|G^*| = \frac{\hat{\tau}}{\hat{\gamma}},$$

mit der (Rand-)scheramplitude $\hat{\gamma}$ und der Randschubspannungsamplitude $\hat{\tau}$.

In Figur 2 ist der Verlauf der Probenhöhe H in Abhängigkeit von der Zeit t bei konstanten Kraftwerten $F_S$ und *F* dargestellt. Die (ebenfalls dargestellten) Kraftwerte F hängen somit nicht von der Probenhöhe ab. Die Graphik 2a zeigt eine Messung, bei der die Kraftamplitude von 9cN während der Messung über die gesamte Probenhöhe von 0,5mm konstant gehalten wurde.

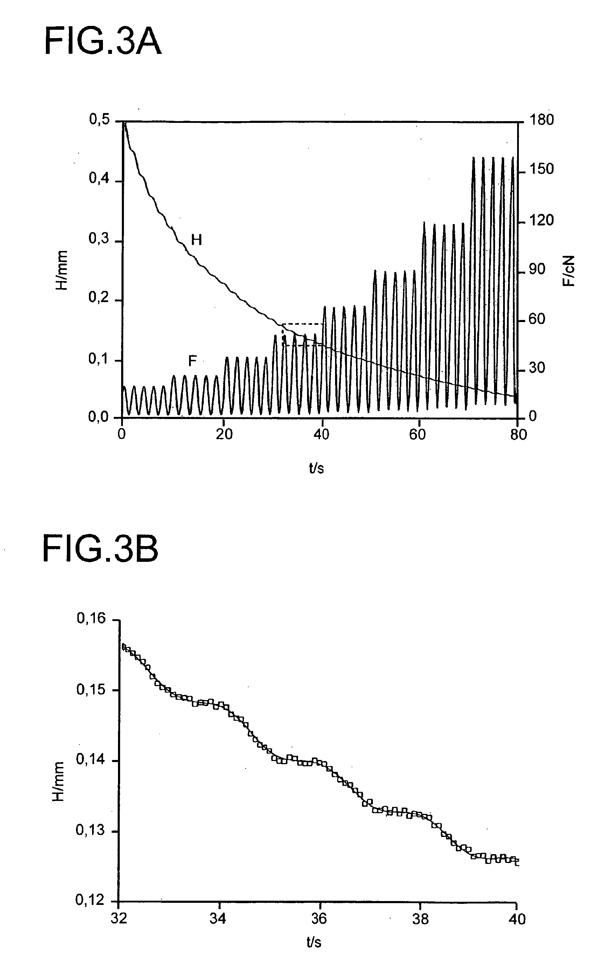

Figur 3 zeigt den Verlauf der Probenhöhe H in Abhängigkeit von der Zeit t bei an die Probenhöhe angepaßten (ebenfalls dargestellten) Kraftwerten F. In Abbildung 3a ist eine Messung gezeigt, bei der die Kraftamplitude entsprechend der Probenhöhenabnahme von anfänglich 9cN bis auf 150cN erhöht wurde.

Sowohl bei der Messung zu Figur 3a, als auch bei der Messung zu Figur 2a betrug die Frequenz der Kraftoszillation 0,5Hz. Figuren 2a und 3a zeigen jeweils den gesamten Kurvenverlauf der Probenhöhe H einerseits (linke Ordinate) und der Stempelkraft F andererseits (rechte Ordinate) in Abhängigkeit von der Zeit t. Es wird deutlich, daß die Abnahme der Probenhöhe bei der Messung mit konstanter Kraft (2a) deutlich langsamer erfolgt, als bei der Messung mit angepaßter Amplitude (3a). Um die beiden Messungen zu vergleichen, wurden in den beiden unteren Figuren 2b und 3b jeweils 8 Sekunden der Messung bei einer vergleichbaren Probenhöhe von ca. 130-150μm vergrößert dargestellt (gestrichelter Kasten in Fig. 2a bzw. Fig.3a). Bei der Messung mit konstanter Kraft (2a/b) entspricht dies dem Zeitintervall von 62-70s, bei der Messung mit angepaßter Kraft (3a/b) wird diese Probenhöhe bereits zwischen 32s und 40s erreicht.

In Figuren 2b und 3b wurde der Kurvenverlauf an die als Quadrate dargestellten Meßpunkte gefittet, da es zur Berechnung der dynamischen Moduln erforderlich ist, die Amplitude und die Phase aus dem zeitlich oszillierenden Verlauf der Probenhöhe zu bestimmen. In die Fitfunktion gehen unter anderem die Amplitude und die Phase als freie Fitparameter ein. Probleme ergeben sich, wenn die Amplitude der Oszillationen sehr klein wird und im Bereich der Auflösung der Wegmessung liegt. Dies geschieht insbesondere bei kleinen Probenhöhen, wenn die Kraftamplitude nicht entsprechend angepasst wird.

In Figur 2b erkennt man die deutlich höhere Streuung der Messwerte um die Fitkurve bei der nicht-angepaßten Kraftamplitude. Demzufolge ist der Fehler der Amplitude und der Phase, die mittels der Fitfunktion ermittelt werden, sehr groß im Vergleich zu dem Fehler bei angepaßter Kraftamplitude. Es ergibt sich in Figur 2b für die Amplitude 0,32±0,05μm (relativer Fehler von 15,6%) und für die Phase 1,45±0,15 (relativer Fehler von 10,3%). Dagegen erhält man für die Messung mit angepaßter Kraftamplitude signifikant geringere Relativfehler. Für die Wegamplitude folgt für die in Figur 3b dargestellte Messung 1,1±0,05μm (relativer Fehler von 4,5%) und für die Phase 1,43±0,04 (relativer Fehler von 2,8%). Dies ermöglicht eine viel genauere Berechnung des Speicher- und des Verlustmoduls bei an die Probehhöhe angepassten Kraftwerten.

Bezugszeichenliste

| | |
|---|---|
| 1 | Stange |
| 2 | Stößel |
| 3 | Elektromagnet |
| 4 | Wegaufnehmer |
| 5 | Blattfedern |
| 6 | Längsrichtung |
| 7 | Probe |
| 8 | Folie |
| 9 | Probenhalter |
| 10 | Näpfchen |
| 11 | 1. Messung mit konstanter Kraft Fs |
| 12 | 2. Messung mit konstanter Kraft $F_S$ |
| 13 | 3. Messung mit konstanter Kraft $F_S$ |
| 14 | 4. Messung mit konstanter Kraft $F_S$ |

**Patentansprüche**

**1.** Verfahren zur Bestimmung rheologischer Eigenschaften eines Materials, **dadurch gekennzeichnet, daß** ein Stößel (2) durch seine Auslenkung eine Kraft auf das als Probe (7) vorliegende Material ausübt und eine Messung des zeitlichen Verlaufs der Kraft und der Auslenkung des Stößels (2) erfolgt, wobei sich die Kraft aus einem momentan statischen Anteil $F_S$ und einem sinusförmigen Anteil $\tilde{F}$ zusammensetzt.

2. Verfahren gemäß Anspruch 1, **dadurch gekennzeichnet, daß** der momentan statische Anteil der Kraft und/oder der sinusförmige Anteil der Kraft eine Funktion der aktuellen Höhe der Probe (7) ist und/oder daß der sinusförmige Anteil der Kraft $\tilde{F}$ eine Amplitude $F$ hat, die wie folgt von dem momentan statischen Anteil der Kraft $F_S$ abhängt: $F = v \cdot F_S$ wobei $v$ einen Wert von 0,8 bis 0,95 annimmt.

3. Verfahren gemäß einem der Ansprüche 1 oder 2, **dadurch gekennzeichnet, daß** aus dem zeitlichen Verlauf der Kraft auf die Probe (7), aus dem zeitlichen Verlauf der Auslenkung des Stößels (2) und aus Geometriegrößen die Scherrate, die Schubspannung, die dynamische Viskosität, der dynamische Schubmodul und die Probenhöhe berechnet werden.

4. Verfahren gemäß einem der Ansprüche 1 bis 3, **dadurch gekennzeichnet, daß** der sinusförmige Anteil der Kraft $\tilde{F}$ eine Frequenz in dem Bereich von 0,01Hz bis 50Hz besitzt oder daß die Frequenz des sinusförmigen Anteils der Kraft $\tilde{F}$ sukzessive in dem Bereich von 0,01Hz bis 50Hz geändert wird.

5. Verfahren gemäß einem der Ansprüche 1 bis 4, **dadurch gekennzeichnet, daß** bei unbekannter Konsistenz des als Probe vorliegenden Materials ein geeigneter Anfangswert für den momentan statischen Anteil der Kraft $F_S(H_0)$ mit Hilfe eines iterativen Verfahrens bestimmt wird, wobei eine optimale Anfangs-Schwingungs-amplitude von $H_{opt} = a \cdot \dfrac{H^2}{3R}$ mit a = 0,05 bis 2, vorzugsweise a=0,5, angestrebt wird.

6. Verfahren gemäß einem der Ansprüche 1 bis 5, das mindestens eines der nachstehenden Merkmale aufweist:

   A) Die Probe (7) ist während der Bestimmung der rheologischen Eigenschaften durch eine Folie (8) abgedeckt,

   B) Die Temperatur einer sich unter der Probe (7) befindenden Platte oder eines Proben halters (9), auf dem sich die Probe (7) befindet, wird konstant gehalten und

   C) Das Material ist ein organisches oder ein anorganisches Polymer.

7. Vorrichtung zur Bestimmung rheologischer Eigenschaften eines Materials, enthaltend einen Stößel (2) zur Ausübung einer Kraft auf das als Probe (7) vorliegende Material, einen Elektromagneten (3) zur Auslenkung des Stößels (2), einen Wegaufnehmer (4) zur Messung der Auslenkung des Stößels (2), sowie vorzugsweise mindestens einen Rechner zur Steuerung, Datenerfassung und Datenauswertung, wobei der Stößel (2) so ausgelenkt wird, daß er eine Kraft auf die Probe (7) ausübt, die sich aus einem momentan statischen Anteil und einem sinusförmigen Anteil zusammensetzt.

8. Vorrichtung gemäß Anspruch 7, mit mindestens einem der folgenden Merkmale:

   A) Das als Probe (7) vorliegende Material ist durch eine Folie (8) abgedeckt,

   B) der Wegaufnehmer (4) ist ein induktiver Wegaufnehmer,

   C) Es ist ein Probenhalter (9) mit mindestens einem Näpfchen (10) zur Aufnahme mindestens einer Probe (7) vorhanden und

   D) der Stößel (2) besitzt einen Durchmesser, der kleiner als der halbe Durchmesser der Probe (7) ist.

9. Vorrichtung gemäß einem der Ansprüche 7oder 8, **dadurch gekennzeichnet, daß** die Vorrichtung in einem Roboterarm eingesetzt wird.

10. Verwendung einer Vorrichtung gemäß einem der Ansprüche 7 bis 9 zur Bestimmung der Scherrate, der Schubspannung, der Viskosität, des dynamischen Schubmoduls und der Anfangshöhe der Probe (7) aus den mit der Vorrichtung gemessenen Werten.

# FIG.1

## FIG.2A

## FIG.2B

## FIG.3A

## FIG.3B